# EUROPEAN PATENT APPLICATION

(11) **EP 4 640 429 A1**
(43) Date of publication of application: **29.10.2025**
(21) Application number: 25172455.5
(22) Date of filing: 24.04.2025
(51) Int. Cl.: B32B 17/10, B60J 1/02

(54) **AUTOMOTIVE GLAZING FOR IMPROVED IMAGE CLARITY**

(30) Priority: 25.04.2024 US 202418646299
(71) Applicant: Tesla, Inc., Austin, TX 78725 (US)
(72) Inventor: MURTHY, Aditya Suresh, Austin, 78725 (US); ROCCHIO, Matthew Robert, Austin, 78725 (US); GOUGOUSSIS, Christos, Austin, 78725 (US)
(74) Representative: Bryn-Jacobsen, Caelia

(57) **Abstract**

An automotive glazing assembly designed to enhance the functionality of vehicular sensor devices, particularly cameras. The assembly includes an outer glass layer with a uniform thickness, an inner glass layer also with a uniform thickness, and a polymer layer situated between the two glass layers, bonding them together. A unique feature of this assembly is a localized area where the inner glass and polymer layers are removed and replaced with a wedge patch. This patch consists of a wedge-shaped polymer layer with a non-uniform thickness that increases in one direction, and a flat glass element attached to it. The wedge patch is specifically designed to reduce total internal reflection and double imaging, thereby improving the optical clarity for cameras positioned behind the windshield.

## Description

### TECHNICAL FIELD

The present disclosure relates generally to automotive glazing technology. More specifically, it relates to structural and material enhancements of windshields for improved vehicular sensor functionality.

### BACKGROUND

Modern vehicles are increasingly equipped with advanced driver-assistance systems (ADAS) that rely on sensors, including cameras, to monitor the vehicle's surroundings. These cameras are often positioned behind the windshield and require a clear, unobstructed view to function optimally. However, standard automotive windshields can present certain optical challenges that degrade the quality of the images captured by these cameras.

One such challenge is the phenomenon of double imaging or ghosting, where a single light source appears as two or more images. This effect is caused by multiple reflections within the windshield's glass layers, leading to total internal reflection. Double imaging can significantly impair the camera's ability to accurately interpret visual data, which is critical for the safe operation of ADAS features such as lane departure warnings, adaptive cruise control, and emergency braking systems.

Another issue arises from the curvature and thickness of conventional windshields, which can cause distortion and refraction of light as it passes through the glass. This distortion can alter the perceived position of objects and reduce the camera's ability to accurately gauge distances and relative speeds, potentially compromising the effectiveness of the ADAS.

The automotive industry has sought to address these issues through various means. One approach has been to apply special coatings or treatments to the windshield glass to reduce reflection and refraction. Another strategy involves the use of flat glass panels in front of the cameras, which can minimize distortion but may not be compatible with the overall design and aerodynamics of the vehicle.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
**FIG. 1** is a diagram depicting an example of an automotive glazing assembly to improve image clarity for one or more sensor devices, according to examples.
**FIG. 2** is a diagram depicting a cross-sectional view of an automotive glazing assembly to improve image clarity for one or more sensor devices, according to examples.
**FIG. 3** is a flow diagram describing a method of manufacturing an automotive glazing assembly to improve image clarity for one or more sensor devices, according to examples.

### DETAILED DESCRIPTION

According to some examples, an automotive glazing assembly to reduce optical distortion affecting vehicular sensor devices, particularly cameras, due to windshield glass properties is described herein. Traditional automotive glazing can cause issues such as double imaging or ghosting, which can significantly impair the functionality of cameras used in advanced driver-assistance systems (ADAS). These issues can arise from the inherent characteristics of standard windshield glass, including its curvature, thickness, and the potential for total internal reflection.

To address at least these challenges, some examples introduce an automotive glazing assembly that incorporates a wedge patch within a localized area of the windshield. This wedge patch is designed to reduce total internal reflection and improve the optical clarity for cameras positioned behind the windshield. In some examples, the wedge patch comprises a wedge-shaped polymer layer with a non-uniform thickness that increases in one direction, coupled with a flat glass element. In some examples, the polymer layer is composed of materials such as Polyvinyl Butyral (PVB), Ionomers, or Thermoplastic Polyurethane (TPU), which are selected for their optical properties and compatibility with the rest of the glazing assembly.

According to some examples, the design of the wedge patch, including its dimensions and angle of inclination, are tuned based on the curvature and thickness of the windshield to address the specific optical requirements of the sensors, such as cameras.

According to some examples, the automotive glazing assembly comprises a first (i.e., an outer) and a second (i.e., an inner) glass layer, each exhibiting a consistent uniform thickness, and which are bonded by a polymer layer of equal uniformity. A wedge patch is incorporated within a specifically defined localized area, where the standard inner glass and polymer layers are removed. The wedge patch comprises a polymer layer that increases in thickness along one axis, forming a wedge shape. As described above, the wedge-shaped polymer layer may be formed of one or more of Polyvinyl Butyral (PVB) Ionomers, and Thermoplastic Polyurethane (TPU), selected for their optical properties and compatibility with the glazing assembly. In some examples, the wedge patch further comprises a flat glass element that is affixed to the wedge-shaped polymer layer.

The dimensions of the wedge patch may align with a field of view of a sensor device, to improve clarity across the operational range of the sensor. Additionally, in some examples, the wedge patch is free from any metallic coatings that could potentially disrupt signal transmission of vehicle antennas.

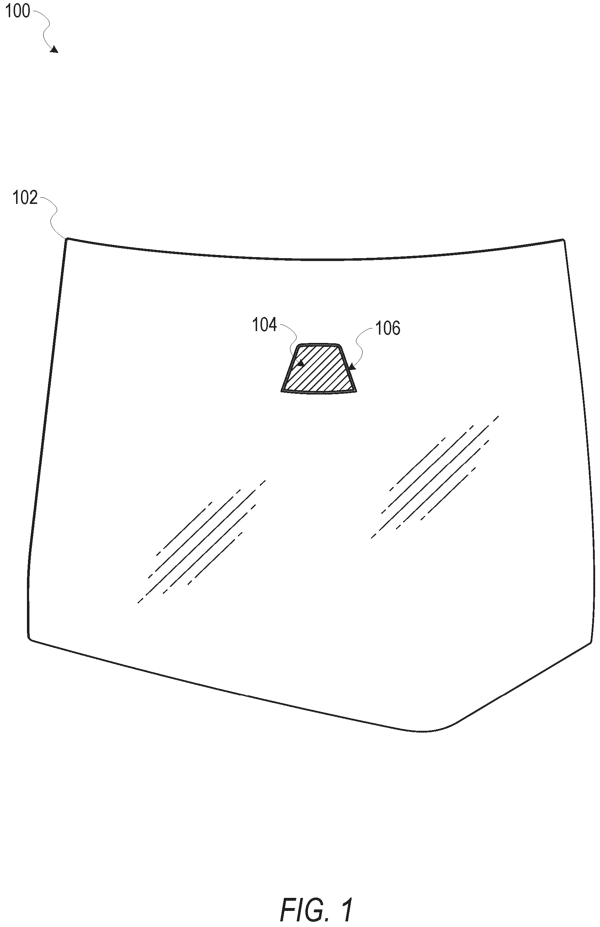

**FIG. 1** is a diagram 100 depicting an example of an automotive glazing assembly 102 to improve image clarity for one or more sensor devices, according to some examples. The automotive glazing assembly 102, which may be a windshield, rear window, or side window of a vehicle, includes a wedge patch 104 applied to a localized area 106.

The automotive glazing assembly 102 is constructed with a first glass layer and a second glass layer, each having a uniform thickness to ensure optical clarity and structural stability. Between these glass layers is a polymer layer that bonds them together, also maintaining a uniform thickness across the assembly. This polymer layer serves not only as an adhesive but also contributes to the safety and acoustic properties of the glazing assembly.

According to some examples described herein, the automotive glazing assembly 102 includes a wedge patch 104, which is strategically applied to a localized area 106 of the assembly. The localized area 106 may be situated directly in front of one or more sensor devices, such as cameras, which are positioned behind the automotive glazing assembly 102. The sensor devices may for example be a part of the vehicle's advanced driver-assistance systems (ADAS) and require a clear, undistorted view through the glazing to function correctly.

The wedge patch 104 may comprise a wedge-shaped polymer layer with a non-uniform thickness that increases in one direction, along an axis. According to certain examples, the angle and thickness gradient of the wedge-shaped polymer layer may be tuned to reduce or eliminate optical distortions, such as double imaging or ghosting, that can occur due to the total internal reflection within the glazing assembly 102. The wedge patch 104 redirects light in a manner that minimizes these distortions, thereby improving the quality of the images captured by the sensor devices.

According to some examples, the wedge patch 104 includes a glass element that is attached or otherwise bonded to the wedge-shaped polymer layer. The glass element may be flat and works in conjunction with the wedge-shaped polymer layer to provide the necessary optical correction. The materials selected for the wedge-shaped polymer layer, such as Polyvinyl Butyral (PVB), Ionomers, or Thermoplastic Polyurethane (TPU), are chosen for their optical properties, durability, and compatibility with the rest of the glazing assembly.

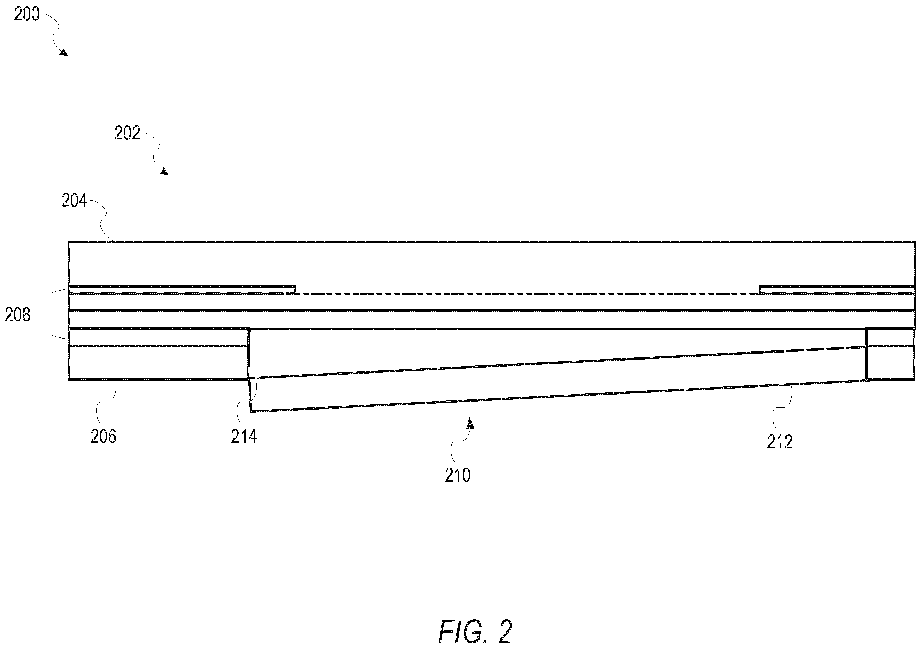

**FIG. 2** is a diagram 200 depicting a cross-sectional view of an automotive glazing assembly 202 to improve image clarity for one or more sensor devices, according to some examples. The automotive glazing assembly 202 may be incorporated into a vehicle as a windshield, rear window, or side window.

According to some examples, the automotive glazing assembly 202 includes several layers that contribute to its structural and optical properties. The first glass layer 204 is the exterior surface of the glazing assembly that faces the environment. The second glass layer 206 is positioned opposite the first layer 204. This second layer 206 is the surface that faces the interior of the vehicle.

Between the first glass layer 204 and the second glass layer 206 are one or more polymer layers 208. These polymer layers 208 may bond the first and second glass layers 204 and 206 together, forming a laminated structure. The polymer layers 208 may be uniform in thickness.

According to some examples, the automotive glazing assembly 202 may include a wedge patch 210, positioned within a localized area to address specific optical requirements of one or more sensor devices associated with the vehicle. The wedge patch 210 includes a flat glass element 212 and a wedge-shaped polymer layer 214.

According to some examples, the wedge-shaped polymer layer 214 is non-uniform in thickness, and increases in one direction, thereby minimizing total internal reflection and improving the image clarity for the one or more sensor devices. The wedge-shaped polymer layer 214 may comprise one or more of Polyvinyl Butyral (PVB), Ionomers, and Thermoplastic Polyurethane (TPU).

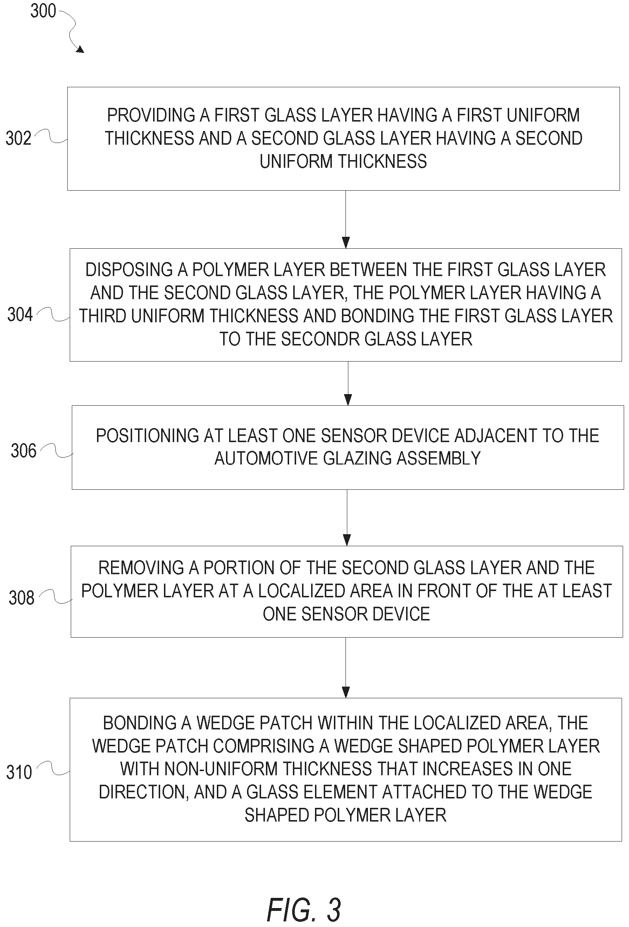

**FIG. 3** is a flow diagram describing a method 300 of manufacturing an automotive glazing assembly to improve image clarity for one or more sensor devices, according to some examples.

At operation 302, the method begins with providing a first glass layer having a first uniform thickness and providing a second glass layer having a second uniform thickness. The uniform thickness of each layer ensures consistent optical performance across the entire surface of the glazing assembly.

At operation 304, one or more polymer layers are disposed between the first glass layer and the second glass layer. For example, according to some examples, one or more polymer layers are applied to either the first glass layer or the second glass layer prior to the assembly of the automotive glazing. This polymer layer, possessing a third uniform thickness, may function as a bonding medium that unites the outer and inner glass layers into a single laminated structure. The application of the polymer layer can be performed on the first glass layer first, followed by aligning and bonding the second glass layer onto it, or vice versa. The choice of sequence may depend on the manufacturing process or equipment preferences. The polymer layer is composed of materials selected for their exceptional adhesive qualities and optical transparency, such as Polyvinyl Butyral (PVB), Ionomers, or Thermoplastic Polyurethane (TPU).

At operation 306, at least one sensor device is positioned adjacent to the automotive glazing assembly. The sensor device(s) may include cameras or other types of sensors used in advanced driver-assistance systems (ADAS). The positioning of the sensor device is carefully determined to ensure that it has an unobstructed view through the glazing assembly. According to some examples, the placement of one or more sensor devices may occur subsequent to the assembly of the automotive glazing.

According to some examples, the one or more sensor devices may not be physically affixed to the glazing assembly itself. Instead, they may be located adjacent or proximate to the fully assembled glazing assembly.

At operation 308, a portion of the second glass layer (i.e., the inner glass layer) and the polymer layer at a localized area in front of the at least one sensor device is removed. This step involves precision cutting techniques to create a recess in the glazing assembly without compromising the surrounding structure. The removal of these portions is performed to accommodate the subsequent insertion of a wedge patch that will provide targeted optical correction for the sensor device.

At operation 310, a wedge patch is bonded within the localized area, either to an inner surface of the first glass layer (if all of the polymer layers are removed from within the localized area), or to an inner surface of a polymer layer from among the one or more polymer layers. The wedge patch may comprise a wedge-shaped polymer layer with a non-uniform thickness that increases in one direction. This gradient in thickness is specifically designed to correct optical distortions such as double imaging or ghosting that can affect the sensor device's image clarity. The wedge patch also includes a glass element attached to the wedge-shaped polymer layer. The glass element is flat and matches the optical properties of the rest of the glazing assembly. The bonding of the wedge patch is achieved using an optically compatible adhesive that ensures a secure and seamless integration with the existing glass and polymer layers.

Although the described flow diagram can show operations as a sequential process, many of the operations can be performed in parallel or concurrently. In addition, the order of the operations may be re-arranged. A process is terminated when its operations are completed. A process may correspond to a method, a procedure, an algorithm, etc. The operations of methods may be performed in whole or in part, may be performed in conjunction with some or all of the operations in other methods, and may be performed by any number of different systems, such as the systems described herein, or any portion thereof, such as a processor included in any of the systems.

### EXAMPLES

Thus, some examples may include one or more of the following examples.

Example 1. An automotive glazing assembly comprising a first glass layer, a second glass layer, a polymer layer disposed between the first glass layer and the second glass layer, the polymer layer bonding the first glass layer to the second glass layer, at least one sensor device positioned adjacent to the automotive glazing assembly, a localized area in a field of view of the at least one sensor device devoid of the second glass layer and the polymer layer, and a wedge patch disposed within the localized area, wherein the wedge patch comprises a wedge-shaped polymer layer having a non-uniform thickness, and a glass element attached to the wedge-shaped polymer layer.

Example 2. The automotive glazing assembly of example 1, wherein the first glass layer comprises a first uniform thickness, the second glass layer comprises a second uniform thickness, and the polymer layer comprises a third uniform thickness.

Example 3. The automotive glazing assembly of any one of the preceding examples, wherein the polymer layer comprises a plurality of polymer layers.

Example 4. The automotive glazing assembly of any one of the preceding examples , wherein the at least one sensor device includes a camera.

Example 5. The automotive glazing assembly of any one of the preceding examples , wherein the wedge patch reduces total internal reflection within the localized area in front of the at least one sensor device within the automotive glazing assembly.

Example 6. The automotive glazing assembly of any one of the preceding examples , wherein the wedge-shaped polymer layer is composed of a material selected from the group consisting of Polyvinyl Butyral (PVB), Ionomers, and Thermoplastic Polyurethane (TPU).

Example 7. The automotive glazing assembly of any one of the preceding examples , wherein the automotive glazing assembly comprises a curvature and thickness, and wherein the wedge-shaped polymer layer comprises an angle of inclination based on the curvature and the thickness of the automotive glazing assembly.

Example 8. The automotive glazing assembly of any one of the preceding examples , wherein the automotive glazing assembly comprises a curvature and thickness, and wherein the glass element comprises a flat glass element.

Example 9. The automotive glazing assembly of any one of the preceding examples , wherein the localized area is defined by a cutout in the second glass layer, and the wedge patch is inserted into the cutout.

Example 10. The automotive glazing assembly of any one of the preceding examples , wherein the wedge patch is bonded to the polymer layer by an optically compatible adhesive.

Example 11. The automotive glazing assembly of any one of the preceding examples , wherein a dimension of the wedge patch is based on a field of view of the at least one sensor device.

Example 12. The automotive glazing assembly of any one of the preceding examples , wherein the wedge patch includes a provision for at least one antenna, such that the wedge-shaped polymer layer and the flat glass piece are devoid of metallic coatings in the vicinity of the at least one antenna.

Example 13. An automotive windshield assembly comprising a first glass layer, a second glass layer, a polymer layer disposed between the first glass layer and the second glass layer, the polymer layer bonding the first glass layer to the second glass layer, at least one sensor device positioned adjacent to the automotive windshield assembly, a localized area in front of the at least one sensor device where the second glass layer and the polymer layer are removed, and a wedge patch disposed within the localized area, wherein the wedge patch comprises a wedge-shaped polymer layer with non-uniform thickness that increases in one direction, and a glass element attached to the wedge-shaped polymer layer.

Example 14. The automotive windshield assembly of example 13, wherein the first glass layer comprises a first uniform thickness, the second glass layer comprises a second uniform thickness, and the polymer layer comprises a third uniform thickness.

Example 15. The automotive windshield assembly of example 13 or 14, wherein the polymer layer comprises a plurality of polymer layers.

Example 16. The automotive windshield assembly of any one of examples 13-15, wherein the at least one sensor device includes a camera.

Example 17. The automotive windshield assembly of any one of examples 13-16, wherein the wedge patch reduces total internal reflection within the localized area in front of the at least one sensor device within the automotive windshield assembly.

Example 18. The automotive windshield assembly of any one of examples 13-17, wherein the wedge-shaped polymer layer is composed of a material selected from the group consisting of Polyvinyl Butyral (PVB), Ionomers, and Thermoplastic Polyurethane (TPU).

Example 19. The automotive windshield assembly of any one of examples 13-18, wherein the automotive glazing assembly comprises a curvature and thickness, and wherein the wedge-shaped polymer layer comprises an angle of inclination based on the curvature and the thickness of the automotive windshield assembly.

Example 20. A method of manufacturing an automotive glazing assembly comprising: providing a first glass layer having a first uniform thickness; providing a second glass layer having a second uniform thickness; disposing a polymer layer between the first glass layer and the second glass layer, the polymer layer having a third uniform thickness and bonding the first glass layer to the second glass layer; positioning at least one sensor device behind the automotive glazing assembly; removing a portion of the second glass layer and the polymer layer at a localized area in front of the at least one sensor device; and bonding a wedge patch within the localized area, the wedge patch comprising: a wedge-shaped polymer layer with non-uniform thickness that increases in one direction; and a glass element attached to the wedge-shaped polymer layer.

While the above is a detailed description of some examples of the inventive subject matter, various alternatives, modifications, and equivalents may be used. Therefore, the above description should not be taken as limiting the scope of the inventive subject matter which is defined by the appended claims.

## Claims

1. An automotive glazing assembly comprising:
a first glass layer;
a second glass layer;
a polymer layer disposed between the first glass layer and the second glass layer, the polymer layer bonding the first glass layer to the second glass layer;
at least one sensor device positioned adjacent to the automotive glazing assembly;
a localized area in a field of view of the at least one sensor device devoid of the second glass layer and the polymer layer; and
a wedge patch disposed within the localized area, the wedge patch comprising:
a wedge-shaped polymer layer having a non-uniform thickness; and
a glass element attached to the wedge-shaped polymer layer.

2. The automotive glazing assembly of claim 1, wherein the first glass layer comprises a first uniform thickness, the second glass layer comprises a second uniform thickness, and the polymer layer comprises a third uniform thickness.

3. The automotive glazing assembly of claim 1 or 2, wherein the polymer layer comprises a plurality of polymer layers.

4. The automotive glazing assembly of any one of the preceding claims, wherein the at least one sensor device includes a camera.

5. The automotive glazing assembly of any one of the preceding claims , wherein the wedge patch reduces total internal reflection within the localized area in front of the at least one sensor device within the automotive glazing assembly.

6. The automotive glazing assembly of any one of the preceding claims , wherein the wedge-shaped polymer layer is composed of a material selected from the group consisting of Polyvinyl Butyral (PVB), Ionomers, and Thermoplastic Polyurethane (TPU).

7. The automotive glazing assembly of any one of the preceding claims , wherein the automotive glazing assembly comprises a curvature and thickness, and wherein the wedge-shaped polymer layer comprises an angle of inclination based on the curvature and the thickness of the automotive glazing assembly.

8. The automotive glazing assembly of any one of the preceding claims , wherein the automotive glazing assembly comprises a curvature and thickness, and wherein the glass element comprises a flat glass element.

9. The automotive glazing assembly of any one of the preceding claims , wherein the localized area is defined by a cutout in the second glass layer, and the wedge patch is inserted into the cutout.

10. The automotive glazing assembly of any one of the preceding claims, wherein the wedge patch is bonded to the polymer layer by an optically compatible adhesive.

11. The automotive glazing assembly of any one of the preceding claims, wherein a dimension of the wedge patch is based on a field of view of the at least one sensor device.

12. The automotive glazing assembly of any one of the preceding claims, wherein the wedge patch includes a provision for at least one antenna, such that the wedge-shaped polymer layer and the flat glass piece are devoid of metallic coatings in the vicinity of the at least one antenna.

13. The automotive glazing assembly of any one of the preceding claims, wherein the glazing assembly consists of a windshield assembly, and wherein being devoid of the second glass layer and the polymer layer comprises the second glass layer and the polymer layer are removed; and wherein
the wedge-shaped polymer layer thickness increases in one direction.

14. The automotive windshield assembly of claim 13, wherein the first glass layer comprises a first uniform thickness, the second glass layer comprises a second uniform thickness, and the polymer layer comprises a third uniform thickness; or optionally
wherein the polymer layer comprises a plurality of polymer layers; or optionally
wherein the at least one sensor device includes a camera' or optionally
wherein the wedge patch reduces total internal reflection within the localized area in front of the at least one sensor device within the automotive windshield assembly; or optionally
wherein the wedge-shaped polymer layer is composed of a material selected from the group consisting of Polyvinyl Butyral (PVB), Ionomers, and Thermoplastic Polyurethane (TPU); or optionally
wherein the automotive glazing assembly comprises a curvature and thickness, and wherein the wedge-shaped polymer layer comprises an angle of inclination based on the curvature and the thickness of the automotive windshield assembly.

15. A method of manufacturing an automotive glazing assembly comprising:
providing a first glass layer having a first uniform thickness;
providing a second glass layer having a second uniform thickness;
disposing a polymer layer between the first glass layer and the second glass layer, the polymer layer having a third uniform thickness and bonding the first glass layer to the second glass layer;
positioning at least one sensor device behind the automotive glazing assembly;
removing a portion of the second glass layer and the polymer layer at a localized area in front of the at least one sensor device; and
bonding a wedge patch within the localized area, the wedge patch comprising:
a wedge-shaped polymer layer with non-uniform thickness that increases in one direction; and
a glass element attached to the wedge-shaped polymer layer.
